# EUROPÄISCHE PATENTSCHRIFT

(11) **EP 2 079 619 B1**
(45) Veröffentlichungstag und Bekanntmachung des Hinweises auf die Patenterteilung: **27.10.2010**
(21) Anmeldenummer: 07786561.6
(22) Anmeldetag: 04.08.2007
(51) Int. Cl.: B60T 17/00, B60T 17/02

(54) **DRUCKLUFTVERSORGUNGSANLAGE UND VERFAHREN ZUR PARAMETER-ERMITTLUNG DER ANLAGE**
COMPRESSED AIR SUPPLY SYSTEM AND METHOD FOR DETERMINING THE PARAMETERS OF SAID SYSTEM
INSTALLATION D'ALIMENTATION EN AIR COMPRIMÉ ET PROCÉDÉ POUR DÉTERMINER DES PARAMÈTRES DE CETTE INSTALLATION

(30) Priorität: 11.10.2006 DE 102006048071
(43) Veröffentlichungstag der Anmeldung: 22.07.2009
(73) Patentinhaber: WABCO GmbH, 30453 Hannover (DE)
(72) Erfinder: DIEKMEYER, Heinrich, 30890 Barsinghausen (DE); REINHARDT, Joachim, 30455 Hannover (DE); SCHÄL, Andreas, 31171 Nordstemmen (DE); WILKEN, Christoph, 48499 Salzbergen (DE)
(74) Vertreter: Lauerwald, Jörg
(86) Internationale Anmeldenummer: PCT/EP2007/006906
(87) Internationale Veröffentlichungsnummer: WO 2008/043403

(56) Entgegenhaltungen:
- EP-A- 1 529 704
- WO-A-96/16271
- WO-A-98/47751
- DE-A1- 10 004 091

## Beschreibung

Die Erfindung betrifft eine Druckluftversorgungsanlage für Kraftfahrzeuge gemäß Oberbegriff des Anspruchs 1 sowie ein Verfahren zur Parameter-Ermittlung der Anlage . gemäß Oberbegriff des Anspruchs 17.

Durch die WO 09847751 A1 ist ein pneumatisches Fahrzeug-Bremssystem bekannt, das einen Kompressor, wenigstens einen Luftverbraucherkreis, beispielsweise Betriebsbremskreise, einen Parkbremskreis, einen Niederdruck-Hilfskreis und einen Hochdruckkreis aufweist, wobei die Kreise Druckluftbehälter und Bedarfsventile aufweisen. Zwischen dem Kompressor und jedem Verbraucherkreis befindet sich ein erstes, im Grundzustand geschlossenes, elektrisch betätigbares Ventil und zwischen dem Kompressor und dem Hilfskreis ein zweites im Grundzustand offenes, elektrisch betätigbares Ventil. Die Ventile werden von einer elektronischen Steuereinheit betätigt. Die Ausgangsanschlüsse der ersten Ventile der Luftverbraucherkreise sind über Rückschlagventile mit dem Ausgangsanschluss des zweiten normalerweise offenen Ventils verbunden. Sollte Druckluftbedarf in einem der Kreise bestehen, beispielsweise bedingt durch zu niedrigen Behälterdruck, wird das entsprechende Ventil durch die Steuereinheit geöffnet und gleichzeitig das zweite Ventil des Hilfskreises geschlossen. Ein Ausfall des Kompressors führt zu einem Druckabfall, der von der Steuereinheit erkannt wird, die die Ventile schließt bzw. geschlossen hält, wodurch der Druck in den Kreisen gehalten wird. Ein Druckregelventil bestimmt die Druckhöhe. Bei Ausfall des Druckregelventils wird Überdruck durch ein Überdruckventil abgelassen. Drucksensoren überwachen die Kreise. Über das zweite normalerweise offene Ventil und über den Kreisen vorgeschaltete Rückschlagventile werden die Kreise mit Luft versorgt. Fällt das elektrische System aus, schalten alle Ventile in den Grundzustand. Der Kompressor läuft trotzdem und versorgt die Kreise über das zweite normalerweise offene Ventil des Hilfskreises mit Luft, wobei der Systemdruck durch ein Niederdruckablassventil des Hilfskreises bestimmt wird. Fällt ein Ventil aus, kann der zugeordnete Kreis über das Ventil des Hilfskreises und das Rückschlagventil mit Luft versorgt werden. Das bekannte System ist aufwendig, da jeder Verbraucherkreis mit einem Druckluftbehälter ausgestattet ist.

Durch die DE 10004091 C2 ist eine Druckluftversorgungseinrichtung für Fahrzeug-Druckluftanlagen mit einem Mehrkreis-Schutzventil, einem Druckregler, einer Versorgungsleitung zur Versorgung der Kreise des Mehrkreis-Schutzventils mit Druckluft, und einem Kompressor bekannt, der mittels einer pneumatischen Schaltvorrichtung schaltbar ist, wobei ein Vorsteuerventil vorgesehen ist, dass den Druckregler und die Schaltvorrichtung steuert, wobei zwischen dem Vorsteuerventil und der Schaltvorrichtung eine Drossel vorgesehen ist. Jeder Kreis weist einen Druckluftbehälter auf. Das Vorsteuerventil wird durch eine Steuer-und/oder Regelelektronik gesteuert und/oder geregelt. Drucksensoren überwachen den Druck in den Kreisen und in der Versorgungsleitung.

Die bekannten Luftaufbereitungsanlagen haben den Nachteil, dass sie entweder mechanisch vom Hersteller justiert bzw. softwareseitig parametriert werden müssen.

Die Aufgabe der vorliegenden Erfindung besteht darin, bei einer Luftaufbereitungsanlage der eingangs genannten Art den Regenerationsvorgang so zu optimieren, dass der Lufttrockner universell einsetzbar ist.

Diese Aufgabe wird durch die Erfindung gemäß Anspruch 1 und 17 gelöst.

Vorteilhafte und zweckmäßige Ausgestaltungen der erfindungsgemäßen Aufgabenlösung sind in den Unteransprüchen angegeben.

Die Erfindung schlägt ein Mehrkreisschutzventil mit Ventilen für die einzelnen Verbraucherkreise und eine elektronische Druckaufbereitungsanlage mit adaptivem Verhalten für die Ermittlung der pneumatischen Fahrzeugauslegung, wie z.B. Kompressorförderleistung, Behälterkonfiguration usw. vor. Bezüglich Behältergröße und Kompressorförderleistung wird eine Parameter-Ermittlung durchgeführt. Dabei wird in weiterer Ausgestaltung der Erfindung die Einstellung so gewählt, dass wenigstens beim erstmaligen Regenationsvorgang eine Überregeneration der Lufttrocknerkartusche stattfindet. Die Erfindung optimiert das Trocknungsverhalten des Lufttrockners und erreicht dadurch eine Reduzierung des Energieverbrauchs für die Drucklufterzeugung. Es ist nicht mehr notwendig die Luftaufbereitungsanlage entsprechend der pneumatischen Fahrzeugauslegung zu parametrieren. Die Erfindung schafft somit einen universellen Lufttrockner, der ohne Anpassung in unterschiedliche Fahrzeuge eingebaut werden kann. Die Ventile des Mehrkreisschutzventils können mechanischer oder elektromagnetischer Art sein.

Die Erfindung soll nachfolgend anhand der beigefügten Zeichnung, die ein Ausführungsbeispiel einer erfindungsgemäßen Luftaufbereitungsanlage zeigt, näher erläutert werden.

Es zeigt
Fig.1 einen Prinzipschaltplan einer erfindungsgemäßen Druckluftaufbereitungsanlage mit mechanischem Mehrkreisschutzventil,
Fig. 2 einen Prinzipschaltplan einer erfindungsgemäßen Druckluftaufbereitungsanlage mit elektromagnetischem Mehrkreisschutzventil und
Fig. 3 eine grafische Darstellung, die die Ermittlung von Behältervolumen und Kompressorleistung während einer Erstbefüllung der Anlage nach Fig. 1 und 2 zeigt.

Gleiche und einander entsprechende Teile in den Figuren der Zeichnung sind mit den gleichen Bezugszeichen versehen.

Druckmittelleitungen sind in der Zeichnung durchgezogene Linien, elektrische Leitungen sind gestrichelte Linien.

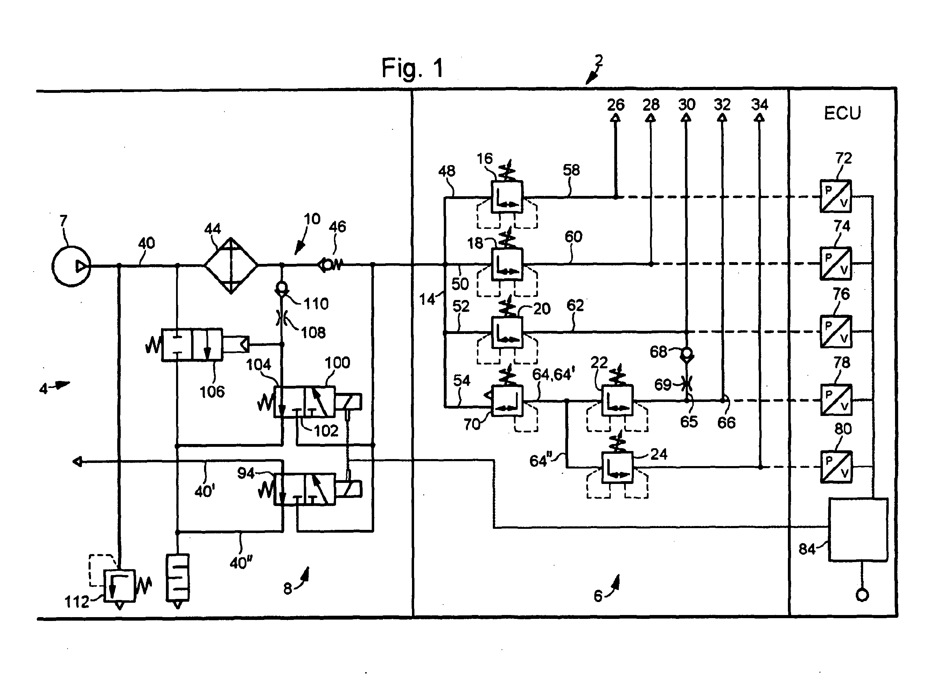

Die Zeichnung zeigt in der Fig. 1 eine Druckluftaufbereitungsanlage 2 mit einem Druckluftversorgungsteil 4 und einem Verbraucherteil 6. Der Druckluftversorgungsteil 4 umfasst einen Kompressor 7, eine Kompressor - Steuereinrichtung 8 und einen Lufttrocknerteil 10.

Der Verbraucherteil 6 weist eine Druckluftverteilerleitung 14, die zu mehreren Ventilen 16, 18, 20, 22, 24 verzweigt, und mehrere über die Ventile mit Druckluft versorgte Verbraucherkreise 26, 28, 30, 32, 34 auf.

Vom Kompressor 7 führt eine Druckluftversorgungsleitung 40 über eine Lufttrocknerkartusche 44, der ein Filter (nicht dargestellt) vorgeschaltet sein kann, und ein Rückschlagventil 46 zur Verteilerleitung 14, von der zu den Ventilen führende Leitungen 48, 50, 52, 54, abzweigen. Von den Ventilen führen Druckluftleitungen 58, 60, 62, 64 zu den Verbraucherkreisen. Die Leitung 64 verzweigt sich in zu den Kreisen 32 und 34 führenden Leitungen 64', 64", wobei die Leitung 64' in zu den Verbraucherkreisen 30, 32 führenden Leitungen 65, 66 abzweigt. In der Leitung 65 sind noch ein Rückschlagventil 68 und eine Drossel 69 angeordnet. In der Versorgungsleitung 54 ist ein Druckbegrenzer 70 angeordnet. In der Leitung 64" ist das Ventil 24 angeordnet.

Drucksensoren 72, 74, 76, 78, 80 überwachen den Druck in den Verbraucherkreisen und geben den jeweiligen Druck als Drucksignal an eine elektronische Steuereinheit 84, die den Druckluftversorgungsteil 4 steuert. Der Druck in der Verteilerleitung 14 kann durch einen nicht dargestellten Drucksensor überwacht werden.

Zusätzlich zum Druck oder anstelle des Druckes können auch andere Zustandsgrößen, wie Luftmenge, Luftmasse, Energie usw., in den Verbraucherkreisen und in den Verbindungsleitungen überwacht bzw. ermittelt werden.

Die Verbraucherkreise 28, 30 können beispielsweise Betriebsbremskreise sein; der Verbraucherkreis 32 kann ein Anhängerbremskreis und/oder ein Feststellbremskreis sein; der Verbraucherkreis 34 kann ein Nebenverbrauchskreis, wie Fahrerhausfederung, Türsteuerung etc., alles was nichts mit den Betriebsbremskreisen zu tun hat, sein; der Verbraucherkreis 26 kann ein Hochdruckkreis für eine Lufttederungsanlage sein. Eine Luftfederungsanlage benötigt normalerweise Hochdruck, weil die Luftfederbälge viel Volumen und relativ hohe Drücke aufweisen.

Die Betriebsbremskreise 28, 30 weisen Druckluftbehälter (nicht dargestellt) entsprechend den Richtlinien 98/12/ EG auf. Der Hochdruckkreis 26 kann ebenfalls einen Druckluftbehälter aufweisen.

Der Kompressor 7 wird über die Kompressorsteuerung 8 mechanisch (pneumatisch) gesteuert. Die Kompressor-Steuerung 8 umfasst ein durch die elektronische Steuereinheit 84 schaltbares Magnetventil 94 (mit kleiner Nennweite), das im stromlosen Grundzustand, wie dargestellt, entlüftet ist. In diesem Zustand ist der Kompressor 7 eingeschaltet und wenigstens ein Verbraucherkreis wird mit Druckluft befüllt. Bei Erreichen einer eingestellten Druckschwelle schaltet die Steuereinheit 84 das Magnetventil 94 um, so dass Druckluft über eine Leitung 40' den druckluftbetätigbaren Kompressor 7 ausschaltet. Wird das Magnetventil 94 stromlos geschaltet für ein erneutes Auffüllen infolge eines Luftverbrauchs, wird das Ventil 94 wieder in den in der Zeichnung dargestellten Grundzustand geschaltet und die Leitung 40' über eine Leitung 40" entlüftet, so dass der Kompressor 7 eingeschaltet wird. Alternativ zu der beschriebenen Ausführungsform kann dem Magnetventil 94 ein pneumatisch schaltbares Ventil nachgeschaltet sein, das im nicht betätigten Grundzustand entlüftet ist zur Entlastung des Kompressors 7 im betätigten Zustand.

Der Lufttrocknerteil 10 umfasst ein Regenerations-Magnetventil 100 (mit kleiner Nennweite), dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zur Entlastung des Kompressors dient. Über das Regenerationsventil 100 erfolgt auch die Regeneration der Lufttrocknerkartusche 44. Die Leitung 40 liegt dann an Atmosphäre.

Wenn das Regenerations-Magnetventil 100 durchgeschaltet ist, fördert der Kompressor 7 nicht mehr in die Verbraucherkreise, sondern über das Ventil 106 ins Freie. Gleichzeitig strömt trockene Luft aus den Verbraucherkreisen 26, 28, 30 über die Verteilerleitung 14, das Magnetventil 100, eine Drossel 108 und ein Rückschlagventil 110 durch die Lufttrocknerkartusche 44 zur Regeneration seines Trockenmittels und weiter über und das Ventil 106 ins Freie.

Das Bezugszeichen 112 bezeichnet ein Überdruckventil.

Die Ventile 16, 18, 20, 22, 24 sind mechanische Überströmventile, die entsprechend den Kreisen hinsichtlich Öffnungsdruck und Schließdruck eingestellt sind. Der Druck in den Kreisen wird unmittelbar an den Ventilen überwacht durch die Drucksensoren 72, 74, 76, 78, 80.

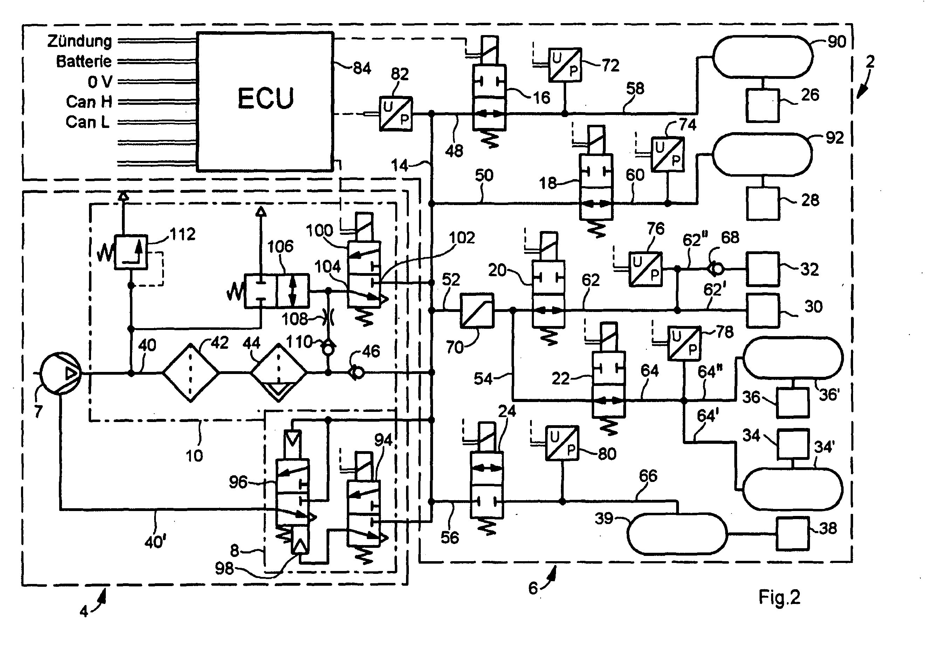

Die Zeichnung zeigt in der Fig. 2 eine Druckluftaufbereitungsanlage 2 mit einem Druckluftversorgungsteil 4 und einem Verbraucherteil 6. Der Druckluftversorgungsteil 4 umfasst einen Kompressor 7, eine Kompressor-Steuereinrichtung 8 und einen Lufttrocknerteil 10.

Der Verbraucherteil 6 weist eine Druckluftverteilerleitung 14, mehrere elektrisch betätigbare Magnetventile 16, 18, 20, 22, 24 mit Rückstellfeder und mehrere über die Magnetventile mit Druckluft versorgte Verbraucherkreise 26, 28, 30, 32, 34, 36, 38 auf.

Vom Kompressor 7 führt eine Druckluftversorgungsleitung 40 über ein Filter 42, eine Lufttrocknerkartusche 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64".

Drucksensoren 72, 74, 76, 78, 80 überwachen den Druck in den Verbraucherkreisen und gegebenenfalls in der Verteilerleitung 14 und geben den jeweiligen Druck als Drucksignal an eine elektronische Steuereinheit 84, die das Druckluftversorgungsteil 4 steuert.

Zusätzlich zum Druck oder anstelle des Druckes können auch andere Zustandsgrößen, wie Luftmenge, Luftmasse, Energie usw., in den Verbraucherkreisen und in den Verbindungsleitungen überwacht bzw. ermittelt werden.

Die Verbraucherkreise 28, 30 können beispielsweise Betriebsbremskreise sein; der Verbraucherkreis 34 kann ein Anhängerbremskreis sein, wobei normalerweise zwei Leitungen zum Anhänger führen; der Verbraucherkreis 32 kann ein Feststellbremskreis mit Federspeicher sein, die Verbraucherkreise 36 und 38 können Nebenverbrauchskreise, wie Fahrerhausfederung, Türsteuerung etc., alles was nichts mit den Betriebsbremskreisen zu tun hat, sein; der Verbraucherkreis 26 kann ein Hochdruckkreis für eine Luftfederungsanlage sein.

Die Betriebsbremskreise 28, 30 weisen Druckluftbehälter 90, 92 entsprechend den Richtlinien 98/12/ EG auf. Der Hochdruckkreis 26 weist einen Druckluftbehälter 39 auf. Die Nebenverbraucherkreise 36, 38 können ebenfalls Druckluftbehälter 36', 38' (gestrichelt eingezeichnet) aufweisen.

Der Kompressor 7 wird über die Kompressorsteuerung 8 mechanisch (pneumatisch) gesteuert. Die Kompressor-Steuerung 8 umfasst ein durch die elektronische Steuereinheit 84 schaltbares Magnetventil 94 (mit kleiner Nennweite), das im stromlosen Grundzustand, wie dargestellt, entlüftet ist, und ein pneumatisch über das Magnetventil 94 schaltbares Ventil 96, das, wie dargestellt, im nicht betätigten Grundzustand entlüftet ist. Wenn der Kompressor 7 eingeschaltet werden soll, weil beispielsweise ein Verbraucherkreis Druckluft benötigt, schaltet die Steuereinheit 84 das Magnetventil 94 um, so dass der Steuereingang 98 des Ventils mit Druck beaufschlagt wird, wodurch das Ventil 96 in den Grundzustand umschaltet (oder geschaltet ist) und den druckbetätigbaren Kompressor über eine Leitung 40' einschaltet. Wird das Magnetventil 94 stromlos geschaltet nach dem Auffüllen des Kreises, wird der Steuereingang 98 über das Magnetventil entlüftet, wodurch das Ventil 96 in seine andere Stellung schaltet und die Leitung 40' belüftet wird, so dass der Kompressor 7 abgeschaltet wird. Alternativ kann auch auf das Ventil 96 verzichtet werden wie beim Ausführungsbeispiel nach Fig. 1.

Der Lufttrocknerteil 10 umfasst ein Magnetventil 100 (mit kleiner Nennweite), dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zur Entlastung des Kompressors dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch die Lufttrocknerkartusche 44 zur Regeneration des Trockenmittels und weiter über den Filter 42 und das Ventil 106 ins Freie.

Das Bezugszeichen 112 bezeichnet ein Überdruckventil.

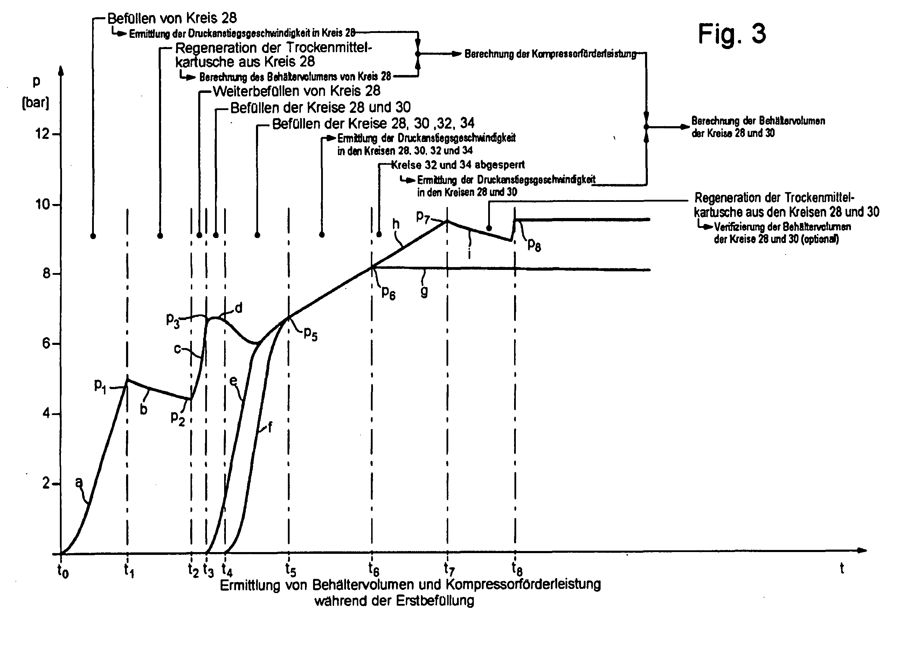

Bei der erfindungsgemäßen Druckluftversorgungsanlage werden zur Ermittlung von Druckluft-Behältervolumen und Kompressorförderleistung während einer Erstbefüllung die Luftdruckanstiegsgeschwindigkeit oder die Auffüllzeit bspw. im Betriebsbremskreis 28 ermittelt, indem die Zeit des Druckanstiegs unter Berücksichtigung der von der Motordrehzahl abhängigen Kompressordrehzahl im zugeordneten Behälter ab Förderbeginn bis zum Erreichen eines bestimmten oberen Druckwertes p₁ in der Steuereinrichtung 84 ermittelt wird, vgl. Kurventeil a) in Fig. 3.

Nach Erreichen des oberen, durch den Drucksensor 74 überwachten, vorgebbaren Druckwertes p₁ wird der Kompressor 7 über das Ventil 94 abgeschaltet und das Magnetventil 100 des Lufttrocknerteils 10 durchgeschaltet, so dass der Kompressor nicht mehr in die Leitung 40 fördert, sondern über das Ventil 106 ins Freie. Gleichzeitig strömt trockene Luft aus dem auf p₁ befüllten Behälter des Kreises 28 über die Verteilerleitung 14, das Magnetventil 100, die Blende 108 und das Rückschlagventil 110 durch die Lufttrocknerkartusche 44 zur Regeneration des Trockenmittels und weiter über das Ventil 106 ins Freie.

Die Regeneration erfolgt über eine Zeit (vgl. Kurventeil b) in der Fig. 3), in der eine ausreichende Regeneration erzielbar ist, bspw. bis der Druck im Behälter auf einen vorbestimmbaren Wert p₂ abgesunken ist. Da der in der Steuereinrichtung 84 abgelegte Blendendurchmesser bekannt ist, kann aus dem Druckabfall p₁-p₂, der Regenerationszeit und dem Blendendurchmesser die zur Regeneration eingesetzte Druckluftmenge bestimmt werden. Aus der Druckluftmenge, dem Blendendurchmesser und der Regenerationszeit berechnet die Steuereinrichtung 84 das Behältervolumen des Kreises 28. Aus der in Abhängigkeit von der Kompressordrehzahl ermittelten Druckanstiegsgeschwindigkeit oder der ermittelten Auffüllzeit im Kreis 28 und der ermittelten Kompressordrehzahl und dem ermittelten Volumen von Kreis 28 errechnet die Steuereinrichtung 84 dann die Kompressor-Förderleistung.

Nach der Regeneration der Lufttrocknerkartusche 44 durch trockene Luft aus Kreis 28 wird der Kreis 28 ab der Zeit t₂ weiter befüllt (Kurventeil c) bis zum Erreichen eines bestimmten Druckes p₃ zum Zeitpunkt t₃. Danach wird der Kreis 30 zusätzlich und der Kreis 28 weiterhin befüllt (Kurventeil d und e) und ab dem Zeitpunkt t₄ werden auch die Kreise 32, 34 befüllt (Kurventeil f), so dass ab dem Zeitpunkt t₄ die Kreise 28, 30, 32,34 gleichzeitig befüllt werden.

Sobald in den Kreisen 28, 30, 32 und 34 der gleiche Druck p₅ herrscht (siehe Zeitpunkt t₅), wird bis zum Zeitpunkt t₆ die Druckanstiegsgeschwindigkeit in den Kreisen 28, 30, 32 und 34 in Abhängigkeit von der Kompressordrehzahl ermittelt. Danach werden ab Erreichen des Druckes p₆ zum Zeitpunkt t₆ die Kreise 32, 34 abgesperrt, sodass der Druck p₆ in den Kreisen 32, 34 konstant beibt, siehe geraden Kurventeil g. Der Druck in den Kreisen 28, 30 wird weiter erhöht (Kurventeil h) bis zum Erreichen eines vorbestimmbaren Druckes p₇ (Zeitpunkt t₇). Aus der Druckdifferenz p₇-p₆ und der Zeit t₇-t₆ wird die Druckanstiegsgeschwindigkeit in Abhängigkeit von der Kompressordrehzahl in den Kreisen 28 und 30 ermittelt. Danach erfolgt eine Regeneration der Lufttrocknerkartusche 44 durch trockene Luft aus den Kreisen 28 und 30 (Kurvententeil i) und ein anschließendes Weiterbefüllen beider Kreise bis zum Abschalten bei einem vorbestimmten Druck p₈ in diesen Kreisen zum Zeitpunkt %.

Aus der bereits berechneten Kompressorförderleistung und der ermittelten Druckanstiegsgeschwindigkeit in den Kreisen 28 und 30 kann in der Steuereinrichtung das Behältervolumen der Kreise 28 und 30 berechnet werden.

Aus der für die Regeneration benötigten Druckluftmenge, dem bekannten Blendendurchmesser und der Regenerationszeit können die Behältervolumen der Kreise 28 und 30 verifiziert werden.

Anstatt für einzelne Behälter oder für Behältergruppen kann das beschriebene Verfahren auch für das Gesamtvolumen aller Behälter durchgeführt werden.

Die auf die beschriebene Weise ermittelten Daten für die Kompressorleistung und die Behältervolumina werden in der Steuereinrichtung abgespeichert. Die abgespeicherten Werte werden dazu verwendet, während des Fahrbetriebs die Kompressorförderleistung zu überwachen, um bei fallender Förderleistung das Regenerationsverhalten an die schlechtere Förderleistung anzupassen und gegebenenfalls ein Warnsignal zu erzeugen. Außerdem erlaubt das erfindungsgemäße Verfahren die Überwachung der Regenerationsblende hinsichtlich einer den Blendendurchmesser verringernden Verschmutzung, um auch hier gegebenenfalls die Verschmutzung zu signalisieren.

Bei einer Änderung oder einem Austausch von Komponenten der Druckluftversorgungsanlage, bspw. des Kompressors, eines Behälters etc., wird eine erneute Parameter-Ermittlung der Druckluftversorgungsanlage durchgeführt.

Die erneute Parameter-Ermittlung wird über ein Diagnosegerät per Programm oder manuell eingeleitet.

Anstelle des Lufttrocknerteils und dessen Blende oder zusätzlich zum Lufttrocknerteil und dessen Blende kann eine andere pneumatische Komponente mit definierter, bekannter Blendengröße zur Parameter-Ermittlung der Druckluftversorgungsanlage verwendet werden.

## Patentansprüche

1. Druckluftversorgungsanlage für Kraftfahrzeuge mit einem Druckluftversorgungsteil mit einem Kompressor, einem eine Lufttrocknerkartusche, eine Blende und ein Ventil umfassenden Lufttrocknerteil und einem Druckluftverbraucherteil mit Betriebsbremskreise umfassenden Druckluftverbraucherkreisen, die über ein Mehrkreisschutzventil mit mehreren Ventilen mit Druckluft versorgt werden, wobei die Betriebsbremskreise und ggf. wenigstens ein weiterer Druckluftverbraucherkreis Druckluftbehälter aufweisen und der Druck in den Druckluftverbraucherkreisen durch Sensoren überwacht wird, deren elektrische Signale einer elektronischen Steuereinrichtung zugeführt und von dieser ausgewertet werden, **dadurch gekennzeichnet, dass**
die elektronische Steuereinrichtung (84) so eingerichtet ist, dass zur Parameter-Ermittlung der Druckluftversorgungsanlage (2) bzgl. Größe der Druckluftbehälter und Förderleistung des Kompressors (7) bei einer Befüllung der Druckluftverbraucherkreise (26, 28, 30, 32, 34, 36, 38) die Luftdruckanstiegsgeschwindigkeit in wenigstens einem Druckluftverbraucherkreis (28, 30, 32) unter Berücksichtigung der Kompressordrehzahl ermittelt wird und nach der Befüllung des wenigstens einen Druckluftverbraucherkreises mit Druckluft aus diesem wenigsten einen Kreis (28, 30, 32) ein Regenerationsvorgang der Lufttrocknerkartusche durchgeführt wird, wobei die Zeit eines vorgebbaren Druckabfalls oder der Druckabfall über eine vorgebbare Zeit (Druckgradient) ermittelt wird und aus der Höhe des Druckabfalls, der Regenerationszeit und dem bekannten Durchmesser der Blende (108) die für den durchgeführten Regenerationsvorgang benötigte Luftmenge und daraus das Volumen des wenigstens einen Behälters ermittelt werden und aus dem Behältervolumen und der unter Berücksichtigung der Kompressordrehzahl ermittelten Luftdruckanstiegsgeschwindigkeit oder der Auffüllzeit die Förderleistung des Kompressors (7) berechnet wird.

2. Druckluftversorgungsanlage nach Anspruch 1, **dadurch gekennzeichnet, dass** die Befüllung eine Erstbefüllung der Druckluftversorgungsanlage ist.

3. Druckluftversorgungsanlage nach Anspruch 1 oder 2, **dadurch gekennzeichnet, dass** die Luftdruckanstiegsgeschwindigkeit aus der Zeit ab Förderbeginn bis zum Erreichen eines oberen dem Verbraucherkreis zugeordneten vorgebbaren Druckschwellwertes (p₁) ermittelt wird.

4. Druckluftversorgungsanlage nach einem der vorhergehenden Ansprüche, **dadurch gekennzeichnet, dass** der Regenerationsvorgang über eine vorgebbare Zeit (t₂- t₁) oder bis zu einem vorgebbaren Druckabbau (p₁- p₂) durchgeführt wird.

5. Druckluftversorgungsanlage nach einem der vorhergehenden Ansprüche, **dadurch gekennzeichnet, dass** der Druckabbau bis zu einem vorgebbaren Wert oberhalb eines unteren dem Verbraucherkreis zugeordneten vorgebbaren Druck-Schwellwertes erfolgt.

6. Druckluftversorgungsanlage nach einem der vorhergehenden Ansprüche, **dadurch gekennzeichnet, dass** während des Fahrbetriebs die Kompressorförderleistung überwacht wird, indem während eines Wiederauffüllvorganges nach einem Druckluftverbrauch für einen vorgebbaren Druckaufbau die für diesen Druckaufbau benötigte Zeit oder die für eine vorgebbare Zeit erreichte Druckerhöhung ermittelt wird und aus der hieraus unter Berücksichtigung der Kompressordrehzahl berechneten Luftdruckanstiegsgeschwindigkeit und dem bekannten Behältervolumen die Kompressor-Förderleistung ermittelt wird.

7. Druckluftversorgungsanlage nach einem der vorhergehenden Ansprüche, **dadurch gekennzeichnet, dass** bei Abfall der Kompressor-Förderleistung unter einen vorgebbaren Wert ein Warnsignal erzeugt wird.

8. Druckluftversorgungsanlage nach einem der vorhergehenden Ansprüche, **dadurch gekennzeichnet, dass** das Regenerationsverhalten an eine sich ändernde Kompressorförderleistung angepasst wird.

9. Druckluftversorgungsanlage nach einem der vorhergehenden Ansprüche, **dadurch gekennzeichnet, dass**
- bei einer Erstbefüllung der Anlage ein Verbraucherkreis (28) befüllt wird bis zu einem vorbestimmbaren Druckwert (p₁),
- nach Erreichen des vorbestimmbaren Druckwertes (p₁) das Lufttrocknerventil (100) durchschaltet zur Regenerierung der Trockenmittel-kartusche (44) des Lufttrockners aus dem Kreis (28),
- der über eine vorbestimmte Regenerierungszeit bewirkte Druckabfall oder die für einen vorbestimmten Druckabfall benötigte Regenerierungszeit ermittelt wird,
- aus der Regenerierungszeit und dem Druckabfall unter Berücksichtigung des abgelegten Durchmesserwertes der Lufttrockner-Blende (108) das Volumen des Behälters des Kreises (28) berechnet wird und
- aus dem Behältervolumen und der von der Kompressordrehzahl abhängigen Druckanstiegsgeschwindigkeit die Förderleistung des Kompressors (7) berechnet wird.

10. Druckluftversorgungsanlage nach Anspruch 9, **dadurch gekennzeichnet, dass** nach der Regeneration der Trockenmittel-Kartusche aus Kreis (28) dieser Kreis (28) ab dem Zeitpunkt (t₂) weiter befüllt wird bis zum Erreichen eines bestimmten Druckes (p₃) und dass danach ein weiterer Kreis (30) zusätzlich befüllt wird und ab einem Zeitpunkt (t₄) ein dritter Kreis (32) befüllt wird, so dass ab dem Zeitpunkt (t₄) die Kreise (28, 30, 32) gleichzeitig befüllt werden.

11. Druckluftversorgungsanlage nach Anspruch 10, **dadurch gekennzeichnet, dass** bis zu einem Zeitpunkt (t₆) die Druckanstiegsgeschwindigkeit in den Kreisen (28, 30 und 32) ermittelt wird, sobald in diesen Kreisen der gleiche Druck (p₅) herrscht, und dass danach ab dem Zeitpunkt (t₆), zu dem der Druck auf einen vorgebbaren Wert (p₆) gestiegen ist, der dritte Kreis (32) abgesperrt wird und bis zu einem vorgebbaren Zeitpunkt (t₇) die Druckanstiegsgeschwindigkeit in den Kreisen (28 und 30) ermittelt wird und dass danach aus der Druckanstiegsgeschwindigkeit und der zuvor über den Kreis (28) berechneten Kompressorförderleistung das Behältervolumen der Kreise (28 und 30) berechnet wird, wobei die Druckanstiegsgeschwindigkeit in Abhängigkeit von der Kompressordrehzahl berechnet wird.

12. Druckluftversorgungsanlage nach einem der vorhergehenden Ansprüche 9 bis 11, **dadurch gekennzeichnet, dass** nach der Regeneration der Trockenmittel-Kartusche aus den Kreisen (28 und 30) aus der Regenerierungszeit, dem Druckabfall und dem Durchmesser der Lufttrocknerblende das Behältervolumen der Kreise (28 und 30) verifizierbar ist.

13. Druckluftversorgungsanlage nach einem der vorhergehenden Ansprüche, **dadurch gekennzeichnet, dass** die Steuereinrichtung (84) so eingestellt ist, dass wenigstens beim erstmaligen Regenerationsvorgang eine Überregeneration stattfindet.

14. Druckluftversorgungsanlage nach einem der vorhergehenden Ansprüche, **dadurch gekennzeichnet, dass** bei einer Änderung oder einem Austausch von Komponenten der Druckluftversorgungsanlage, bspw. des Kompressors, eines Behälters etc., eine erneute Parameter-Ermittlung der Druckluftversorgungsanlage durchgeführt wird.

15. Druckluftversorgungsanlage nach Anspruch 14, **dadurch gekennzeichnet, dass** die erneute Parameter-Ermittlung über ein Diagnosegerät per Programm oder manuell eingeleitet wird.

16. Druckluftversorgungsanlage nach einem der vorhergehenden Ansprüche, **dadurch gekennzeichnet, dass** anstelle des Lufttrocknerteils und dessen Blende oder zusätzlich zum Lufttrocknerteil und dessen Blende eine andere pneumatische Komponente mit definierter, bekannter Blendengröße zur Parameter-Ermittlung der Druckluftversorgungsanlage verwendet wird.

17. Verfahren zur Parameter- Ermittlung einer Druckluftversorgungsanlage für Kraftfahrzeuge, wobei die Druckluftversorgungsanlage einen Druckluftversorgungsteil mit einem Kompressor, einen eine Lufttrocknerkartusche, eine Blende und ein Ventil umfassenden Lufttrocknerteil und einen Druckluftverbraucherteil mit Betriebsbremskreise umfassenden Druckluftverbraucherkreisen aufweist, die über ein Mehrkreisschutzventil mit mehreren Ventilen mit Druckluft versorgt werden, wobei die Betriebsbremskreise und ggf. wenigstens ein weiterer Druckluftverbraucherkreis Druckluftbehälter aufweisen und der Druck in den Druckluftverbraucherkreisen durch Sensoren überwacht wird, deren elektrische Signale einer elektronischen Steuereinrichtung zugeführt und von dieser ausgewertet werden, **gekennzeichnet durch** folgende Verfahrensschritte:
Befüllung der Druckluftverbraucherkreise (26, 28, 30, 32, 34, 36, 38),
Ermittlung der Luftdruckanstiegsgeschwindigkeit in wenigstens einem Druckluftverbraucherkreis (28, 30, 32) unter Berücksichtigung der Kompressordrehzahl,
Durchführung eines Regenerationsvorganges der Lufttrocknerkartusche nach der Befüllung des wenigstens einen Druckluftverbraucherkreises mit Druckluft aus diesem wenigsten einen Kreis (28, 30, 32), wobei die Zeit eines vorgebbaren Druckabfalls oder der Druckabfall über eine vorgebbare Zeit (Druckgradient) ermittelt wird,
Ermittlung der für den durchgeführten Regenerationsvorgang benötigten Luftmenge aus der Höhe des Druckabfalls, der Regenerationszeit und dem bekannten Durchmesser der Blende (108),
Ermittlung des Volumens des wenigstens einen Behälters,
Berechnung der Förderleistung des Kompressors aus dem Behältervolumen und der unter Berücksichtigung der Kompressordrehzahl ermittelten Luftdruckanstiegsgeschwindigkeit oder der Auffüllzeit.

18. Verfahren nach Anspruch 17, **dadurch gekennzeichnet, dass** die Befüllung eine Erstbefüllung der Druckluftversorgungsanlage ist.

19. Verfahren nach Anspruch 17 oder 18, **dadurch gekennzeichnet, dass** die Luftdruckanstiegsgeschwindigkeit aus der Zeit ab Förderbeginn bis zum Erreichen eines oberen dem Verbraucherkreis zugeordneten vorgebbaren Druckschwellwertes (p₁) ermittelt wird.

20. Verfahren nach einem der Ansprüche 17 -19, **dadurch gekennzeichnet, dass** der Regenerationsvorgang über eine vorgebbare Zeit (t₂- t₁) oder bis zu einem vorgebbaren Druckabbau (p₁- p₂) durchgeführt wird.

21. Verfahren nach einem der Ansprüche 17 - 20, **dadurch gekennzeichnet, dass** der Druckabbau bis zu einem vorgebbaren Wert oberhalb eines unteren dem Verbraucherkreis zugeordneten vorgebbaren Druck-Schwellwertes erfolgt.

22. Verfahren nach einem der Ansprüche 17 - 21, **dadurch gekennzeichnet, dass** während des Fahrbetriebs die Kompressorförderleistung überwacht wird, indem während eines Wiederauffüllvorganges nach einem Druckluftverbrauch für einen vorgebbaren Druckaufbau die für diesen Druckaufbau benötigte Zeit oder die für eine vorgebbare Zeit erreichte Druckerhöhung ermittelt wird und aus der hieraus unter Berücksichtigung der Kompressordrehzahl berechneten Luftdruckanstiegsgeschwindigkeit und dem bekannten Behältervolumen die Kompressor-Förderleistung ermittelt wird.

23. Verfahren nach einem der Ansprüche 17-22, **dadurch gekennzeichnet, dass** bei Abfall der Kompressor-Förderleistung unter einen vorgebbaren Wert ein Warnsignal erzeugt wird.

24. Verfahren nach einem der Ansprüche 17 - 23, **dadurch gekennzeichnet, dass** das Regenerationsverhalten an eine sich ändernde Kompressorförderleistung angepasst wird.

25. Verfahren nach einem der Ansprüche 17-24, **dadurch gekennzeichnet, dass**
- bei einer Erstbefüllung der Anlage ein Verbraucherkreis (28) befüllt wird bis zu einem vorbestimmbaren Druckwert (p₁),
- nach Erreichen des vorbestimmbaren Druckwertes (p₁) das Lufttrocknerventil (100) durchgeschaltet wird zur Regenerierung der Trockenmittel-kartusche (44) des Lufttrockners aus dem Kreis (28),
- der über eine vorbestimmte Regenerierungszeit bewirkte Druckabfall oder die für einen vorbestimmten Druckabfall benötigte Regenerierungszeit ermittelt wird,
- aus der Regenerierungszeit und dem Druckabfall unter Berücksichtigung des abgelegten Durchmesserwertes der Lufttrockner-Blende (108) das Volumen des Behälters des Kreises (28) berechnet wird und
- aus dem Behältervolumen und der von der Kompressordrehzahl abhängigen Druckanstiegsgeschwindigkeit die Förderleistung des Kompressors (7) berechnet wird.

26. Verfahren nach Anspruch 25, **dadurch gekennzeichnet, dass** nach der Regeneration der Trockenmittel-Kartusche aus Kreis (28) dieser Kreis (28) ab dem Zeitpunkt (t₂) weiter befüllt wird bis zum Erreichen eines bestimmten Druckes (p₃) und dass danach ein weiterer Kreis (30) zusätzlich befüllt wird und ab einem Zeitpunkt (t₄) ein dritter Kreis (32) und ein vierter Kreis (34) befüllt werden, so dass ab dem Zeitpunkt (t₄) die Kreise (28, 30, 32,34) gleichzeitig befüllt werden.

27. Verfahren nach Anspruch 24, **dadurch gekennzeichnet, dass** bis zu einem Zeitpunkt (t₆ die Druckanstiegsgeschwindigkeit in den Kreisen (28, 30, 32 und 34) ermittelt wird, sobald in diesen Kreisen der gleiche Druck (p₅) herrscht, und dass danach ab dem Zeitpunkt (t₆), zu dem der Druck auf einen vorgebbaren Wert (p₆) gestiegen ist, der dritte und vierte Kreis (32, 34) abgesperrt werden und bis zu einem vorgebbaren Zeitpunkt (t₇) die Druckanstiegsgeschwindigkeit in den Kreisen (28 und 30) ermittelt wird und dass danach aus der Druckanstiegsgeschwindigkeit und der zuvor über den Kreis (28) berechneten Kompressorförderleistung das Behältervolumen der Kreise (28 und 30) berechnet wird, wobei die Druckanstiegsgeschwindigkeit in Abhängigkeit von der Kompressordrehzahl berechnet wird.

28. Verfahren nach einem der Ansprüche 25 bis 27, **dadurch gekennzeichnet, dass** nach der Regeneration der Trockenmittel-Kartusche aus den Kreisen (28 und 30) aus der Regenerierungszeit, dem Druckabfall und dem Durchmesser der Lufttrocknerblende das Behältervolumen der Kreise (28 und 30) verifiziert wird.

29. Verfahren nach einem der Ansprüche 17 - 27, **dadurch gekennzeichnet, dass** wenigstens beim erstmaligen Regenerationsvorgang eine Überregeneration durchgeführt wird..

30. Verfahren nach einem der Ansprüche 17-29, **dadurch gekennzeichnet, dass** bei einer Änderung oder einem Austausch von Komponenten der Druckluftversorgungsanlage, bspw. des Kompressors, eines Behälters etc., eine erneute Parameter-Ermittlung der Druckluftversorgungsanlage durchgeführt wird.

31. Verfahren nach Anspruch 30, **dadurch gekennzeichnet, dass** die erneute Parameter-Ermittlung über ein Diagnosegerät per Programm oder manuell eingeleitet wird.

32. Verfahren nach einem der Ansprüche 17 - 31, **dadurch gekennzeichnet, dass** anstelle des Lufttrocknerteils und dessen Blende oder zusätzlich zum Lufttrocknerteil und dessen Blende eine andere pneumatische Komponente mit definierter, bekannter Blendengröße zur Parameter-Ermittlung der Druckluftversorgungsanlage verwendet wird.

## Claims

1. Compressed air supply system for motor vehicles having a compressed air supply element with a compressor, having an air dryer element comprising an air dryer cartridge, a diaphragm and a valve and having a compressed air consumer element with compressed air consumer circuits comprising service brake circuits, which compressed air consumer circuits are supplied with compressed air via a multi-circuit protection valve with a plurality of valves, the service brake circuits and optionally at least one further compressed air consumer circuit comprising compressed air reservoirs and the pressure in the compressed air consumer circuits being monitored by sensors, whose electrical signals are supplied to an electronic control means and evaluated thereby, **characterized in that** the electronic control means (84) is set up such that, for parameter determination of the compressed air supply system (2) with regard to the size of the compressed air reservoirs and the delivery capacity of the compressor (7) upon filling of the compressed air consumer circuits (26, 28, 30, 32, 34, 36, 38), the rate of air pressure rise in at least one compressed air consumer circuit (28, 30, 32) is determined, taking account of the rotational speed of the compressor, and after filling of the at least one compressed air consumer circuit with compressed air from this at least one circuit (28, 30, 32), a regeneration process of the air dryer cartridge is performed, wherein the time of a predeterminable pressure drop or the pressure drop over a predeterminable time (pressure gradient) is determined and from the level of the pressure drop, the regeneration time and the known diameter of the diaphragm (108) the air quantity required for the performed regeneration process is determined, and therefrom the volume of the at least one reservoir, and the delivery capacity of the compressor (7) is calculated from the reservoir volume and from the rate of air pressure rise determined taking account of the rotational speed of the compressor or from the filling time.

2. Compressed air supply system according to Claim 1, **characterized in that** the filling is a first fill of the compressed air supply system.

3. Compressed air supply system according to Claim 1 or 2, **characterized in that** the rate of air pressure rise is determined from the time from the start of delivery to the reaching of an upper predeterminable pressure threshold value (p₁) assigned to the consumer circuit.

4. Compressed air supply system according to one of the preceding claims, **characterized in that** the regeneration process is performed over a predeterminable time (t₂-t₁) or up to a predeterminable pressure reduction (p₁-p₂).

5. Compressed air supply system according to one of the preceding claims, **characterized in that** the pressure reduction proceeds to a predeterminable value above a lower predeterminable pressure threshold value assigned to the consumer circuit.

6. Compressed air supply system according to one of the preceding claims, **characterized in that** during travel operation the compressor delivery capacity is monitored **in that**, during a refilling process after compressed air consumption for a predeterminable pressure build-up, the time necessary for this pressure build-up or the increase in pressure achieved over a predeterminable time is determined and from the rate of air pressure rise calculated therefrom taking account of the rotational speed of the compressor and from the known reservoir volume the compressor delivery capacity is determined.

7. Compressed air supply system according to one of the preceding claims, **characterized in that** a warning signal is generated if the compressor delivery capacity falls below a predeterminable value.

8. Compressed air supply system according to one of the preceding claims, **characterized in that** the regeneration behaviour is adapted to a varying compressor delivery capacity.

9. Compressed air supply system according to one of the preceding claims, **characterized in that**
- on a first fill of the system a consumer circuit (28) is filled up to a predeterminable pressure value (p₁)
- once the predeterminable pressure value (p₁) has been reached, the air dryer valve (100) switches through for regeneration of the desiccant cartridge (44) of the air dryer from the circuit (28),
- the pressure drop brought about over a predetermined regeneration time or the regeneration time required for a predetermined pressure drop is determined,
- the volume of the reservoir of the circuit (28) is calculated from the regeneration time and the pressure drop, taking account of the saved diameter value of the air dryer diaphragm (108) and
- the delivery capacity of the compressor (7) is calculated from the reservoir volume and the rate of pressure rise, which is dependent on the rotational speed of the compressor.

10. Compressed air supply system according to Claim 9, **characterized in that**, after regeneration of the desiccant cartridge from circuit (28), this circuit (28) is filled further from the time (t₂) until a set pressure (p₃) is reached and **in that** thereafter a further circuit (30) is additionally filled and from a time (t₄) a third circuit (32) is filled, such that from the time (t₄) the circuits (28, 30, 32) are filled simultaneously.

11. Compressed air supply system according to Claim 10, **characterized in that** up to a time (t₆) the rate of pressure rise in the circuits (28, 30 and 32) is determined, as soon as the same pressure (p₅) prevails in these circuits, and **in that** thereafter from the time (t₆), at which the pressure has risen to a predeterminable value (p₆), the third circuit (32) is closed off and up to a predeterminable time (t₇) the rate of pressure rise in the circuits (28 and 30) is determined and **in that** thereafter the reservoir volume of the circuits (28 and 30) is calculated from the rate of pressure rise and the compressor delivery capacity calculated previously via the circuit (28), the rate of pressure rise being calculated as a function of the rotational speed of the compressor.

12. Compressed air supply system according to one of preceding Claims 9 to 11, **characterized in that** after regeneration of the desiccant cartridge from the circuits (28 and 30) the reservoir volume of the circuits (28 and 30) may be verified from the regeneration time, the pressure drop and the diameter of the air dryer diaphragm.

13. Compressed air supply system according to one of the preceding claims, **characterized in that** the control means (84) is set up such that over-regeneration takes place at least during the first regeneration process.

14. Compressed air supply system according to one of the preceding claims, **characterized in that**, on a change or replacement of components of the compressed air supply system, for example the compressor, a reservoir etc., parameter determination of the compressed air supply system is performed again.

15. Compressed air supply system according to Claim 14, **characterized in that** the new parameter determination is initiated via a diagnostic device by program or manually.

16. Compressed air supply system according to one of the preceding claims, **characterized in that**, instead of the air dryer element and the diaphragm thereof or in addition to the air dryer element and the diaphragm thereof, another pneumatic component with a defined, known diaphragm size is used for parameter determination of the compressed air supply system.

17. Method for parameter determination of a compressed air supply system for motor vehicles, the compressed air supply system having a compressed air supply element with a compressor, having an air dryer element comprising an air dryer cartridge, a diaphragm and a valve and having a compressed air consumer element with compressed air consumer circuits comprising service brake circuits, which compressed air consumer circuits are supplied with compressed air via a multi-circuit protection valve with a plurality of valves, the service brake circuits and optionally at least one further compressed air consumer circuit comprising compressed air reservoirs and the pressure in the compressed air consumer circuits being monitored by sensors, whose electrical signals are supplied to an electronic control means and evaluated thereby, **characterized by** the following method steps: filling the compressed air consumer circuits (26, 28, 30, 32, 34, 36, 38), determining the rate of air pressure rise in at least one compressed air consumer circuit (28, 30, 32), taking account of the rotational speed of the compressor,
performing a regeneration process of the air dryer cartridge after filling of the at least one compressed air consumer circuit with compressed air from this at least one circuit (28, 30, 32), the time of a predeterminable pressure drop or the pressure drop over a predeterminable time (pressure gradient) being determined,
determining the air quantity required for the performed regeneration process from the level of the pressure drop, the regeneration time and the known diameter of the diaphragm (108),
determining the volume of the at least one reservoir, calculating the delivery capacity of the compressor from the reservoir volume and from the rate of air pressure rise determined taking account of the rotational speed of the compressor or from the filling time.

18. Method according to Claim 17, **characterized in that** the filling is a first fill of the compressed air supply system.

19. Method according to Claim 17 or 18, **characterized in that** the rate of air pressure rise is determined from the time from the start of delivery to the reaching of an upper predeterminable pressure threshold value (p₁) assigned to the consumer circuit.

20. Method according to one of Claims 17 - 19, **characterized in that** the regeneration process is performed over a predeterminable time (t₂-t₁) or up to a predeterminable pressure reduction (p₁-p₂).

21. Method according to one of Claims 17 - 20, **characterized in that** the pressure reduction proceeds to a predeterminable value above a lower predeterminable pressure threshold value assigned to the consumer circuit.

22. Method according to one of Claims 17 - 21, **characterized in that** during travel operation the compressor delivery capacity is monitored **in that**, during a refilling process after compressed air consumption for a predeterminable pressure build-up, the time necessary for this pressure build-up or the increase in pressure achieved over a predeterminable time is determined and from the rate of air pressure rise calculated therefrom taking account of the rotational speed of the compressor and from the known reservoir volume the compressor delivery capacity is determined.

23. Method according to one of Claims 17 - 22, **characterized in that** a warning signal is generated if the compressor delivery capacity falls below a predeterminable value.

24. Method according to one of Claims 17 - 23, **characterized in that** the regeneration behaviour is adapted to a varying compressor delivery capacity.

25. A method according to one of Claims 17 - 24, **characterized in that**
- on a first fill of the system a consumer circuit (28) is filled up to a predeterminable pressure value (p₁),
- once the predeterminable pressure value (p₁) has been reached, the air dryer valve (100) is switched through for regeneration of the desiccant cartridge (44) of the air dryer from the circuit (28),
- the pressure drop brought about over a predetermined regeneration time or the regeneration time required for a predetermined pressure drop is determined,
- the volume of the reservoir of the circuit (28) is calculated from the regeneration time and the pressure drop, taking account of the saved diameter value of the air dryer diaphragm (108) and
- the delivery capacity of the compressor (7) is calculated from the reservoir volume and the rate of pressure rise, which is dependent on the rotational speed of the compressor.

26. Method according to Claim 25, **characterized in that**, after regeneration of the desiccant cartridge from circuit (28), this circuit (28) is filled further from the time (t₂) until a set pressure (p₃) is reached and **in that** thereafter a further circuit (30) is additionally filled and from a time (t₄) a third circuit (32) and a fourth circuit (34) are filled, such that from the time (t₄) the circuits (28, 30, 32, 34) are filled simultaneously.

27. Method according to Claim 24, **characterized in that** up to a time (t₆) the rate of pressure rise in the circuits (28, 30, 32 and 34) is determined, as soon as the same pressure (p₅) prevails in these circuits, and **in that** thereafter from the time (t₆), at which the pressure has risen to a predeterminable value (p₆), the third and fourth circuits (32, 34) are closed off and up to a predeterminable time (t₇) the rate of pressure rise in the circuits (28 and 30) is determined and **in that** thereafter the reservoir volume of the circuits (28 and 30) is calculated from the rate of pressure rise and the compressor delivery capacity calculated previously via the circuit (28), the rate of pressure rise being calculated as a function of the rotational speed of the compressor.

28. Method according to one of Claims 25 to 27, **characterized in that** after regeneration of the desiccant cartridge from circuits (28 and 30) the reservoir volume of the circuits (28 and 30) is verified from the regeneration time, the pressure drop and the diameter of the air dryer diaphragm.

29. Method according to one of Claims 17 - 27, **characterized in that** over-regeneration is performed at least during the first regeneration process.

30. Method according to one of Claims 17 - 29, **characterized in that**, on a change or replacement of components of the compressed air supply system, for example the compressor, a reservoir etc., parameter determination of the compressed air supply system is performed again.

31. Method according to Claim 30, **characterized in that** the new parameter determination is initiated via a diagnostic device by program or manually.

32. Method according to one of Claims 17 - 31, **characterized in that**, instead of the air dryer element and the diaphragm thereof or in addition to the air dryer element and the diaphragm thereof, another pneumatic component with a defined, known diaphragm size is used for parameter determination of the compressed air supply system.

## Revendications

1. Installation d'alimentation en air comprimé pour véhicules automobiles, comprenant une partie d'alimentation en air comprimé avec un compresseur, une partie de dessiccateur d'air comprenant une cartouche de dessiccateur d'air, un diaphragme et une soupape, et une partie de consommateur d'air comprimé avec des circuits consommateurs d'air comprimé comprenant des circuits de frein de service, qui sont alimentés en air comprimé par le biais d'une soupape de protection pour plusieurs circuits comprenant plusieurs soupapes, les circuits de frein de service et éventuellement au moins un autre circuit consommateur d'air comprimé présentant des réservoirs d'air comprimé, et la pression dans les circuits consommateurs d'air comprimé étant surveillée par des capteurs dont les signaux électriques sont acheminés à un dispositif de commande électronique et sont analysés par celui-ci, **caractérisée en ce que** le dispositif de commande électronique (84) est conçu de telle sorte que pour la détermination de paramètres de l'installation d'alimentation en air comprimé (2) en termes de taille des réservoirs d'air comprimé et de puissance de refoulement du compresseur (7), dans le cas d'un remplissage des circuits consommateurs d'air comprimé (26, 28, 30, 32, 34, 36, 38), la vitesse d'augmentation de la pression d'air dans au moins un circuit consommateur d'air comprimé (28, 30, 32) est déterminée en tenant compte du régime du compresseur et après le remplissage de l'au moins un circuit consommateur d'air comprimé avec de l'air comprimé à partir de cet au moins un circuit (28, 30, 32), on effectue une opération de régénération de la cartouche de dessiccateur d'air, la durée d'une chute de pression prédéterminable ou la chute de pression étant déterminée sur une durée prédéfinissable (gradient de pression) et à partir de la hauteur de la chute de pression, du temps de régénération et du diamètre connu du diaphragme (108), on détermine la quantité d'air nécessaire pour l'opération de régénération mise en oeuvre et à partir de celle-ci, le volume de l'au moins un réservoir et à partir du volume du réservoir et de la vitesse d'augmentation de la pression d'air déterminée en tenant compte du régime du compresseur ou de la durée de remplissage, on calcule la puissance de refoulement du compresseur (7).

2. Installation d'alimentation en air comprimé selon la revendication 1, **caractérisée en ce que** le remplissage est un premier remplissage de l'installation d'alimentation en air comprimé.

3. Installation d'alimentation en air comprimé selon la revendication 1 ou 2, **caractérisée en ce que** la vitesse d'augmentation de la pression d'air est déterminée à partir de la durée à partir du début du refoulement jusqu'à l'obtention d'une valeur de seuil de pression supérieure (p₁) prédéfinissable associée au circuit consommateur.

4. Installation d'alimentation en air comprimé selon l'une quelconque des revendications précédentes, **caractérisée en ce que** l'opération de régénération est effectuée sur une durée prédéterminable (t₂-t₁) ou jusqu'à une diminution de pression prédéterminable (p₁-p₂).

5. Installation d'alimentation en air comprimé selon l'une quelconque des revendications précédentes, **caractérisée en ce que** la diminution de pression s'effectue jusqu'à une valeur prédéfinissable au-dessus d'une valeur seuil de pression prédéfinissable inférieure associée au circuit consommateur.

6. Installation d'alimentation en air comprimé selon l'une quelconque des revendications précédentes, **caractérisée en ce que** pendant le mode de conduite, la puissance de refoulement du compresseur est surveillée, en déterminant, pendant une opération de remplissage renouvelée après une consommation d'air comprimé pour une augmentation de pression prédéfinissable, la durée nécessaire pour cette augmentation de pression ou l'augmentation de pression obtenue pour une durée prédéfinissable, et l'on détermine la puissance de refoulement du compresseur à partir de la vitesse d'augmentation de la pression d'air calculée en conséquence en tenant compte du régime du compresseur et du volume du réservoir connu.

7. Installation d'alimentation en air comprimé selon l'une quelconque des revendications précédentes, **caractérisée en ce que** dans le cas d'une chute de la puissance de refoulement du compresseur en dessous d'une valeur prédéfinissable, un signal d'avertissement est généré.

8. Installation d'alimentation en air comprimé selon l'une quelconque des revendications précédentes, **caractérisée en ce que** le comportement de régénération est adapté à une puissance de refoulement du compresseur variable.

9. Installation d'alimentation en air comprimé selon l'une quelconque des revendications précédentes, **caractérisée en ce que**
- dans le cas d'un premier remplissage de l'installation, un circuit consommateur (28) est rempli jusqu'à une valeur de pression prédéfinissable (p₁),
- après l'obtention de la valeur de pression prédéfinissable (p₁), la soupape de dessiccateur d'air (100) est commutée pour la régénération de la cartouche d'agent dessiccateur (44) du dessiccateur d'air à partir du circuit (28),
- la chute de pression provoquée sur une durée de régénération prédéterminée ou la durée de régénération nécessaire pour une chute de pression prédéterminée est déterminée,
- à partir de la durée de régénération et de la chute de pression, on calcule, en tenant compte de la valeur du diamètre enregistrée du diaphragme du dessiccateur d'air (108), le volume du réservoir du circuit (28), et
- à partir du volume du réservoir et de la vitesse d'augmentation de la pression dépendant du régime du compresseur, on calcule la puissance de refoulement du compresseur (7).

10. Installation d'alimentation en air comprimé selon la revendication 9, **caractérisée en ce qu'**après la régénération de la cartouche d'agent dessiccateur à partir du circuit (28), ce circuit (28) est à nouveau rempli à partir de l'instant (t₂) jusqu'à l'obtention d'une pression déterminée (p₃) et **en ce qu'**ensuite un circuit supplémentaire (30) est à nouveau rempli et à partir d'un instant (t₄) un troisième circuit (32) est rempli, de telle sorte qu'à partir de l'instant (t₄), les circuits (28, 30, 32) soient remplis simultanément.

11. Installation d'alimentation en air comprimé selon la revendication 10, **caractérisée en ce que** jusqu'à un instant (t₆), la vitesse d'augmentation de la pression dans les circuits (28, 30 et 32) est déterminée, dès qu'il règne dans ces circuits la même pression (p₅) , et **en ce qu'**ensuite, à partir de l'instant (t₆), auquel la pression a augmenté à une valeur prédéfinissable (p₆), le troisième circuit (32) est bloqué et jusqu'à un instant prédéfinissable (t₇), la vitesse d'augmentation de la pression dans les circuits (28 et 30) est déterminée, et **en ce qu'**ensuite à partir de la vitesse d'augmentation de pression et de la puissance de refoulement du compresseur calculée préalablement sur le circuit (28), on calcule le volume du réservoir des circuits (28 et 30), la vitesse d'augmentation de la pression étant calculée en fonction du régime du compresseur.

12. Installation d'alimentation en air comprimé selon l'une quelconque des revendications précédentes 9 à 11, **caractérisée en ce qu'**après la régénération de la cartouche d'agent dessiccateur à partir des circuits (28 et 30), on peut vérifier, à partir de la durée de régénération, de la chute de pression et du diamètre du diaphragme du dessiccateur d'air, le volume du réservoir des circuits (28 et 30).

13. Installation d'alimentation en air comprimé selon l'une quelconque des revendications précédentes, **caractérisée en ce que** le dispositif de commande (84) est conçu de telle sorte qu'au moins lors de la première opération de régénération, il se produise une surrégénération.

14. Installation d'alimentation en air comprimé selon l'une quelconque des revendications précédentes, **caractérisée en ce que** dans le cas d'une modification ou d'un remplacement de composants de l'installation d'alimentation en air comprimé, par exemple du compresseur, d'un réservoir, etc., on effectue une nouvelle détermination des paramètres de l'installation d'alimentation en air comprimé.

15. Installation d'alimentation en air comprimé selon la revendication 14, **caractérisée en ce que** la nouvelle détermination des paramètres est amorcée par le biais d'un appareil de diagnostic au moyen d'un programme ou manuellement.

16. Installation d'alimentation en air comprimé selon l'une quelconque des revendications précédentes, **caractérisée en ce qu'**au lieu de la partie de dessiccateur d'air et de son diaphragme, ou en plus de la partie de dessiccateur d'air et de son diaphragme, on utilise un autre composant pneumatique avec une taille de diaphragme définie connue pour la détermination des paramètres de l'installation d'alimentation en air comprimé.

17. Procédé pour la détermination des paramètres d'une installation d'alimentation en air comprimé pour véhicules automobiles, dans lequel l'installation d'alimentation en air comprimé présente une partie d'alimentation en air comprimé avec un compresseur, une partie de dessiccateur d'air comprenant une cartouche de dessiccateur d'air, un diaphragme et une soupape, et une partie de consommateur d'air comprimé avec des circuits consommateurs d'air comprimé comprenant des circuits de frein de service, qui sont alimentés en air comprimé par le biais d'une soupape de protection pour plusieurs circuits comprenant plusieurs soupapes, les circuits de frein de service et éventuellement au moins un autre circuit consommateur d'air comprimé présentant des réservoirs d'air comprimé, et la pression dans les circuits consommateurs d'air comprimé étant surveillée par des capteurs dont les signaux électriques sont acheminés à un dispositif de commande électronique et sont analysés par celui-ci, **caractérisé par** les étapes de procédé suivantes :
remplissage des circuits consommateurs d'air comprimé (26, 28, 30, 32, 34, 36, 38),
détermination de la vitesse d'augmentation de la pression d'air dans au moins un circuit consommateur d'air comprimé (28, 30, 32) en tenant compte du régime du compresseur,
mise en oeuvre d'une opération de régénération de la cartouche du dessiccateur d'air après le remplissage de l'au moins un circuit consommateur d'air comprimé avec de l'air comprimé à partir de cet au moins un circuit (28, 30, 32), la durée d'une chute de pression prédéterminable ou la chute de pression étant déterminée sur une durée prédéterminable (gradient de pression),
détermination de la quantité d'air nécessaire pour l'opération de régénération effectuée à partir de la hauteur de la chute de pression, de la durée de la régénération et du diamètre connu du diaphragme (108),
détermination du volume de l'au moins un réservoir,
calcul de la puissance de refoulement du compresseur à partir du volume du réservoir et de la vitesse d'augmentation de la pression d'air déterminée en tenant compte du régime du compresseur ou de la durée de remplissage.

18. Procédé selon la revendication 17, **caractérisé en ce que** le remplissage est un premier remplissage de l'installation d'alimentation en air comprimé.

19. Procédé selon la revendication 17 ou 18, **caractérisé en ce que** la vitesse d'augmentation de la pression d'air est déterminée à partir de la durée à partir du début du refoulement jusqu'à l'obtention d'une valeur de seuil de pression prédéfinissable supérieure (p₁) associée au circuit consommateur.

20. Procédé selon l'une quelconque des revendications 17 à 19, **caractérisé en ce que** l'opération de régénération est effectuée sur une durée prédéfinissable (t₂-t₁) ou jusqu'à une chute de pression prédéfinissable (p₁-p₂).

21. Procédé selon l'une quelconque des revendications 17 à 20, **caractérisé en ce que** la chute de pression a lieu jusqu'à une valeur prédéfinissable au-dessus d'une valeur seuil de pression prédéfinissable inférieure associée au circuit consommateur.

22. Procédé selon l'une quelconque des revendications 17 à 21, **caractérisé en ce que** pendant le mode de conduite, la puissance de refoulement du compresseur est surveillée, en déterminant, pendant une opération de remplissage renouvelée après une consommation d'air comprimé pour une augmentation de pression prédéfinissable, la durée nécessaire pour cette augmentation de pression ou l'augmentation de pression obtenue pour une durée prédéfinissable, et l'on détermine la puissance de refoulement du compresseur à partir de la vitesse d'augmentation de la pression d'air calculée en conséquence en tenant compte du régime du compresseur et du volume du réservoir connu.

23. Procédé selon l'une quelconque des revendications 17 à 22, **caractérisé en ce que** dans le cas d'une chute de la puissance de refoulement du compresseur en dessous d'une valeur prédéfinissable, un signal d'avertissement est généré.

24. Procédé selon l'une quelconque des revendications 17 à 23, **caractérisé en ce que**
le comportement de régénération est adapté à une puissance de refoulement du compresseur variable.

25. Procédé selon l'une quelconque des revendications 17 à 24, **caractérisé en ce que** :
- dans le cas d'un premier remplissage de l'installation, un circuit consommateur (28) est rempli jusqu'à une valeur de pression prédéfinissable (p₁),
- après l'obtention de la valeur de pression prédéfinissable (p₁), la soupape de dessiccateur d'air (100) est commutée pour la régénération de la cartouche d'agent dessiccateur (44) du dessiccateur d'air à partir du circuit (28),
- la chute de pression provoquée sur une durée de régénération prédéterminée ou la durée de régénération nécessaire pour une chute de pression prédéterminée est déterminée,
- à partir de la durée de régénération et de la chute de pression, on calcule, en tenant compte de la valeur du diamètre enregistrée du diaphragme du dessiccateur d'air (108), le volume du réservoir du circuit (28), et
- à partir du volume du réservoir et de la vitesse d'augmentation de la pression dépendant du régime du compresseur, on calcule la puissance de refoulement du compresseur (7).

26. Procédé selon la revendication 25, **caractérisé en ce qu'**après la régénération de la cartouche d'agent dessiccateur à partir du circuit (28), ce circuit (28) est à nouveau rempli à partir de l'instant (t₂) jusqu'à l'obtention d'une pression déterminée (p₃) et **en ce qu'**ensuite un circuit supplémentaire (30) est à nouveau rempli et à partir d'un instant (t₄) un troisième circuit (32) et un quatrième circuit (34) sont remplis, de telle sorte qu'à partir de l'instant (t₄), les circuits (28, 30, 32, 34) soient remplis simultanément.

27. Procédé selon la revendication 24, **caractérisé en ce que** jusqu'à un instant (t₆), la vitesse d'augmentation de la pression dans les circuits (28, 30, 32 et 34) est déterminée, dès qu'il règne dans ces circuits la même pression (p₅), et **en ce qu'**ensuite, à partir de l'instant (t₆), auquel la pression a augmenté à une valeur prédéfinissable (p₆), le troisième circuit et le quatrième circuit (32, 34) sont bloqués et jusqu'à un instant prédéfinissable (t₇), la vitesse d'augmentation de la pression dans les circuits (28 et 30) est déterminée, et **en ce qu'**ensuite à partir de la vitesse d'augmentation de pression et de la puissance de refoulement du compresseur calculée préalablement sur le circuit (28), on calcule le volume du réservoir des circuits (28 et 30), la vitesse d'augmentation de la pression étant calculée en fonction du régime du compresseur.

28. Procédé selon l'une quelconque des revendications 25 à 27, **caractérisé en ce qu'**après la régénération de la cartouche d'agent dessiccateur à partir des circuits (28 et 30), on vérifie, à partir de la durée de régénération, de la chute de pression et du diamètre du diaphragme du dessiccateur d'air, le volume du réservoir des circuits (28 et 30).

29. Procédé selon l'une quelconque des revendications 17 à 27, **caractérisé en ce qu'**au moins lors de la première opération de régénération, il se produit une surrégénération.

30. Procédé selon l'une quelconque des revendications 17 à 29, **caractérisé en ce que** dans le cas d'une modification ou d'un remplacement de composants de l'installation d'alimentation en air comprimé, par exemple du compresseur, d'un réservoir, etc., on effectue une nouvelle détermination des paramètres de l'installation d'alimentation en air comprimé.

31. Procédé selon la revendication 30, **caractérisé en ce que** la nouvelle détermination des paramètres est amorcée par le biais d'un appareil de diagnostic au moyen d'un programme ou manuellement.

32. Procédé selon l'une quelconque des revendications 17 à 31, **caractérisé en ce qu'**au lieu de la partie de dessiccateur d'air et de son diaphragme, ou en plus de la partie de dessiccateur d'air et de son diaphragme, on utilise un autre composant pneumatique avec une taille de diaphragme définie connue pour la détermination des paramètres de l'installation d'alimentation en air comprimé.
